# EUROPEAN PATENT APPLICATION

(11) **EP 3 614 049 A1**
(43) Date of publication of application: **26.02.2020**
(21) Application number: 18020405.9
(22) Date of filing: 22.08.2018
(51) Int. Cl.: F23D 14/22, F23D 14/32

(54) **A METHOD OF OPERATING A BURNER FOR PERFORMING FLAMELESS COMBUSTION OR AT LEAST SEMI FLAMELESS COMBUSTION AND FLUID SUPPLY SYSTEM**

(71) Applicant: Linde Aktiengesellschaft, 80331 München (DE)
(72) Inventor: Richardson, Andrew Peter, Clinton, NJ 08809 (US); Iassogna, Matthew, Cleveland, OH 44113 (US); Haneline, Kyle, Fairview Park, OH 44126 (US)
(74) Representative: Gellner, Bernd

(57) **Abstract**

The present invention relates to a method of operating a burner and a fluid supply system (100) for a burner, wherein the fluid supply system (100) for the burner comprises a first fluid injector (110) comprising at least one first fluid injection element (111, 112), a second fluid injector (120) comprising at least one second fluid injection element (121, 122), and a valve unit (150) between the first fluid injector (110) and the second fluid injector (120), wherein a fluid is provided to the fluid supply system (100) such that the burner performs flameless combustion or at least semi flameless combustion, wherein if a pressure of the fluid at the valve unit (150) does not reach a predetermined threshold value, the valve unit (150) is closed and the fluid is provided to the burner via the first fluid injector (110) at least with a predetermined flowrate, wherein if the pressure of the fluid at the valve unit (150) reaches the predetermined threshold value, the valve unit (150) opens and the fluid is provided to the burner via the first fluid injector (110) at least with the predetermined flowrate and also via the second fluid injector (120).

## Description

The present invention relates to a method of operating a burner and a fluid supply system for a burner such that the burner performs flameless combustion or at least semi flameless combustion.

### Prior art

Flameless combustion functions on the principle of separated high velocity jets (sonic or supersonic speed) of oxidant and fuel. The oxidant and fuel jets independently entrain hot combustion products from a furnace environment and thus become diluted and preheated prior to their interaction. Once these jets interact at temperatures above their auto ignition temperatures they react in a diffuse cloud like manner. In this way the well defined luminous flame observed in conventional combustion does not occur and the reaction and heat is released in an effectively non-visible manner to the observer. The heat release can occur over a larger region leading to more uniform heating. Peak flame temperatures are avoided thereby significantly reducing the amount of NOx formed in the combustion process.

Semi flameless combustion functions on a similar basis, but additionally with a visible flame maintained by a conventional burner producing a very fuel rich stream of combustion products which is entrained into high velocity oxidant jets for subsequent oxidation.

Flameless combustion or semi flameless combustion is thus a combustion technology to create a more uniform heating and lower emissions of oxides of nitrogen and can be used in several industries, e.g. the steel industry and aluminium processing industries, or also as an air fuel technology in applications such as fired heaters and crackers.

It is particularly desirable to improve methods and burners for performing flameless or semi flameless combustion.

### Disclosure of the invention

The present invention relates to a method of operating a burner and a fluid supply system for a burner with the features of the independent claims. Further advantages and embodiments of the invention will become apparent from the description and the appended figures. Advantages and embodiments of the method and the fluid supply system according to the invention shall arise from the following description in an analogous manner.

The fluid supply system of the burner comprises a first fluid injector comprising at least one first fluid injection element, a second fluid injector comprising at least one second fluid injection element, and a valve unit between the first fluid injector and the second fluid injector. The first and second fluid injectors can each be provided e.g. as an array of one or more corresponding injection elements, e.g. lances or nozzles. These injection elements are especially configured to provide fluid to the burner and particularly to produce a jet or stream of the fluid. The fluid supply system, particularly the first fluid injector, can be connected with a fluid storage vessel. The second fluid injector is particularly provided downstream of the first fluid injector. The valve unit is particularly provided downstream of the first fluid injector and upstream of the second fluid injector. The valve unit especially comprises at least one valve element.

According to the present invention a fluid is provided to the fluid supply system such that the burner performs flameless combustion or at least semi flameless combustion. If a pressure of the fluid at the valve unit does not reach a predetermined threshold value, the valve unit is or remains closed and the fluid is provided to the burner via the first fluid injector at least with a predetermined flowrate. If the pressure of the fluid at the valve unit reaches the predetermined threshold value, the valve unit opens and the fluid is provided to the burner via the first fluid injector at least with the predetermined flowrate and also via the second fluid injector.

The predetermined flowrate particularly refers to a flowrate at which the burner can perform flameless or at least semi flameless combustion. The invention provides a possibility of supplying fluid to the burner with the predetermined flowrate with the first fluid injector, flexibly switching on and switching off the second fluid injector and maintaining the predetermined flowrate with the first fluid injector. The number of fluid injectors used for supplying the fluid for performing the combustion can be increased with an increasing demand of fluid or decreased with a decreasing demand of fluid. The predetermined flowrate is particularly maintained independently of using only one or both fluid injectors for supplying the fluid. Therefore, fluid is always provided with the predetermined flowrate at least by one of the injectors such that an effective flameless or semi flameless combustion can be maintained.

When operating the burner the fluid is first of all particularly provided via the first injector at least with the predetermined flowrate. With an increasing demand of the fluid for the flameless or semi flameless combustion the amount of fluid provided via the first fluid injector is increased. Thus, also the pressure of the fluid at the valve unit increases. When the pressure reaches the predetermined threshold value the valve unit opens and the fluid is provided via both the first and the second injector. The predetermined threshold is particularly chosen such that the predetermined flowrate of the fluid provided via the first fluid injector can be maintained when the valve unit is open. The flowrate of the fluid provided via the second fluid injector particularly depends on the specific predetermined threshold value and can e.g. be equal to or larger than the predetermined flowrate or can especially also be lower than the predetermined flowrate.

Vice versa when fluid is provided via both injectors the amount of fluid provided by the fluid supply system is reduced with decreasing demand of the fluid for the flameless or semi flameless combustion. Thus, the pressure at the valve unit is also reduced. When the pressure falls below the predetermined threshold value the valve closes and fluid is only provided via the first fluid injector.

Switching the second injector on and off yield the possibility of flexibly adjusting the amount of fluid supplied e.g. in dependence of a firing rate of the burner. As the firing rate varies so particularly also does the amount of fluid needed for combustion and as such at lower firing rates proportionately less fluid is required. In order to maintain adequate entrainment and recirculation of combustion products the fluid stream with the predetermined flowrate is particularly required. Since the predetermined flowrate can always be maintained according to the present invention, flameless or semi flameless combustion can be maintained when adjusting the amount of fluid in dependence of the firing rate.

In common burners which usually comprise a fixed number of fluid injectors which can not be varied, i.e. where individual injectors cannot flexibly be switched on or off, adjusting the amount of fluid to varying firing rates and maintaining a flameless or semi flameless combustion is usually not easily possible. If the amount of fluid supplied by these fixed number of fluid injectors of common burners is reduced such that the flowrate drops below a specific value, the desired entrainment or recirculation needed for flameless or semi flameless operation cannot be maintained. Common burners could be pulse fired such that a flowrate needed for flameless or semi flameless combustion can be maintained, however, a pulse operation of that kind can lead to thermal stresses and failure due to thermal cycling. These disadvantages can be overcome by the present invention.

According to a preferred embodiment, if the pressure of the fluid at the valve unit exceeds the predetermined threshold value, the valve unit opens proportionally to the pressure of the fluid at the valve unit. The valve unit therefore preferably does not comprise only a discrete close and a discrete open state, but can advantageously gradually or dynamically be opened and closed. Expediently, the fluid is provided to the burner via the first fluid injector at least with the predetermined flowrate independent of to what extent the valve unit is opened. The flowrate with which the fluid is provided via the second fluid injector particularly depends on how much the valve unit is opened. The amount of additional fluid provided via the second fluid injector can thus particularly be controlled or adjusted.

Advantageously, if the pressure of the fluid at the valve unit reaches a further predetermined threshold value larger than the predetermined threshold value, the valve unit is fully opened. When the valve unit is fully opened, the fluid is provided via the second fluid injector especially also at least with the predetermined flowrate.

According to a particularly preferred embodiment, a proportional pressure relief valve is provided as the valve unit. The proportional pressure relief valve opens expediently automatically when the pressure reaches the predetermined threshold value and opens dynamically when the pressure varies between the predetermined threshold and another predetermined threshold, especially without having to actively control the proportional pressure relief valve. When used in the fuel supply system according to the present invention, a proportional pressure relief valve yields a particularly advantageous possibility to flexibly switch the second fluid injector on and off maintaining the predetermined flowrate of the first fluid injector and thus maintaining flameless or semi flameless combustion of the burner.

Advantageously, the predetermined flowrate corresponds to a sonic velocity of the fluid. That means when the fluid is provided at least with this predetermined flowrate especially a sonic fluid jet with sonic velocity or greater velocities is produced. With sonic jets of that kind adequate entrainment and recirculation of combustion products into the fluid steam can particularly be maintained.

Particularly advantageous, the fluid is an oxidant, particularly oxygen or air, particularly a mixture of oxygen and air. When the oxidant is provided with the predetermined flowrate and thus preferably with sonic velocities, oxidant jets are expediently produced which create the entrainment and recirculation of combustion products for flameless or semi flameless combustion. Expediently, a mixture with varying proportions of oxygen and air can be provided as oxidant, wherein with different proportions different firing rates can be adjusted.

Alternatively or additionally the fluid can preferably be a fuel, e.g. natural gas, methane, propane etc. Advantageously a first fluid supply system according to the invention is provided for an oxidant and a second fluid supply system according to the invention is provided for a fuel.

Preferably the first fluid injector comprises at least one nozzle as the at least one first fluid injection element. Alternatively or additionally also the second fluid injector preferably comprises at least one nozzle as the at least one second fluid injection element. Particularly, each fluid injector can comprise two injection elements. The system thus particularly comprises two arrays of injection elements. Thus, the fluid supply system particularly comprises four injection elements, wherein a first pair of fluid injection elements provided as the first injector is separated from a second pair of fluid injection elements provided as the second injector via the valve unit. In this case, at least one pair of injection elements, namely of the first injector, maintains a fluid flow with the predetermined flowrate and the second pair can flexibly be switched on and off. In contrast to that in common burners with four injection elements it is usually not easily possible to switch off two of the four injection elements.

It shall be understood that the fluid supply system can also comprise several valve units for several other fluid injectors to be switched on and off. Thus, the flexibility of supplying the fluid and switching on and off additional fluid injectors can be increased.

Preferably, the fluid supply system for the burner further comprises at least one third fluid injector comprising at least one third fluid injection element and at least one second valve unit between the first fluid injector and the at least one third fluid injector or between the second fluid injector and the at least one third fluid injector.

Analogously to the valve unit, the at least one second valve unit is closed if the pressure of the fluid at the at least one second valve unit does not reach a second predetermined threshold value. The fluid is then provided to the burner via the first fluid injector at least with a predetermined flowrate or via the first fluid injector at least with the predetermined flowrate and also via the second fluid injector.

If the pressure of the fluid at the at least one second valve unit reaches the second predetermined threshold value, the at least one second valve unit opens and the fluid is provided to the burner via the first fluid injector at least with the predetermined flowrate and also via the at least one third fluid injector or via the first fluid injector at least with the predetermined flowrate, via the second fluid injector and also via the at least one third fluid injector.

The second predetermined threshold value(s) can be identical to or different from the predetermined threshold value. For example, for each different fluid injector a different threshold value can be predetermined. The valve unit and the at least one second valve unit can expediently be provided in series and/or in parallel.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which
- Fig. 1 to 4: each schematically show a burner with a fluid supply system according to a preferred embodiment of the present invention.
- Fig. 5: schematically shows a preferred embodiment of a method according to the present invention as a block diagram.

### Detailed description

In the figures identical reference numerals refer to identical or equal elements.

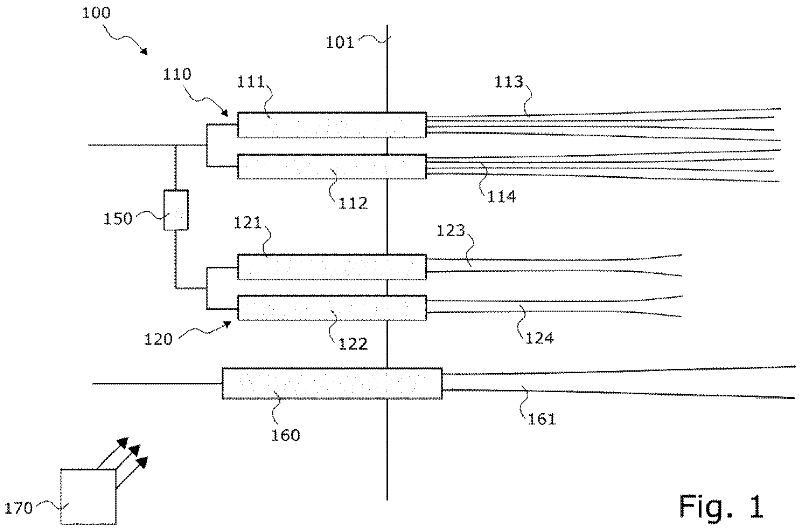

Fig. 1 schematically shows a burner with a fluid supply system 100 according to a preferred embodiment of the present invention.

The burner can be provided for a furnace 101, for example a steel reheating furnace. In order to provide a uniform heating and low emissions of oxides of nitrogen the burner is configured to perform flameless combustion.

For this purpose, a fuel supply system, e.g. in the form of a nozzle 160 is configured to provide a high velocity jet 161 of fuel, e.g. natural gas.

Further, a fluid supply system 100 according to a preferred embodiment of the present invention is configured to provide oxidant as a fluid, e.g. oxygen. Fluid in the form of the oxidant is provided to the fluid supply system 100 such that the burner performs flameless combustion. The fluid supply system 100 is particularly configured to provide at least one high velocity jet of the oxidant with a predetermined flowrate and thus preferably with a sonic velocity.

The oxidant and fuel jets independently entrain hot combustion products from the furnace environment and thus become diluted and preheated prior to their interaction. Once these jets interact at temperatures above their auto ignition temperatures they react in a diffuse cloud like manner in a flameless combustion.

The fluid supply system 100 or oxidant supply system 100 comprises a first fluid injector 110 and a second fluid injector 120. The first fluid injector 110 comprises two first fluid injection elements, e.g. two nozzles 111, 112. Analogously, the second fluid injector 120 comprises two second fluid injection elements, e.g. two nozzles 121, 122.

A valve unit in the form of a proportional pressure relief valve 150 is provided between the first fluid injector 110 and the second fluid injector 120.

The proportional pressure relief valve 150 is configured to be closed if a pressure of the oxidant at the valve 150 does not reach a predetermined threshold value. The oxidant is then provided to the burner via the first fluid injector 110 at least with a predetermined flowrate. In this case oxidant jets 113, 114 with sonic velocities are created by the nozzles 111 and 112.

Further, the proportional pressure relief valve 150 is configured to be opened if the pressure of the oxidant at the valve 150 reaches the predetermined threshold value. The oxidant is then provided to the burner via the first fluid injector 110 at least with the predetermined flowrate and also via the second fluid injector 120. The oxidant jets 113, 114 are in this case maintained with sonic velocities and furthermore oxidant jets 123, 124 are also created by the nozzles 121 and 122, respectively.

The proportional pressure relief valve 150 opens proportionally to the pressure of the oxidant at the valve 150. Therefore, the valve 150 opens dynamically when the oxidant pressure varies between the predetermined threshold value and a further predetermined threshold value. The valve 150 is fully opened if the oxidant pressure reaches this further predetermined threshold value. The flowrate and velocity of the oxidant jets 123, 124 can be varied depending on how much the valve 150 is opened.

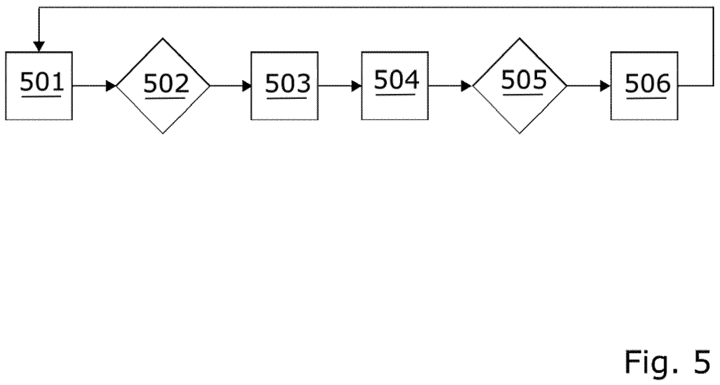

A control unit 170 is configured to control the burner and further to perform a preferred embodiment of a method according to the present invention schematically shown as a block diagram in Fig. 5. This preferred embodiment of the method according to the present invention will now be described with reference to Fig. 1 and Fig. 5.

Particularly, the control unit 170 controls the amount of oxidant provided to the first fluid injector 110. Thus, it can particularly also be controlled whether the valve 150 is opened or closed and thus the second fluid injector 120 can flexibly be switched on or off.

In step 501 the oxidant is fed directly to the first fluid injector 110 such that the jets 113, 114 with the predetermined flowrate and sonic velocity are created.

In step 502 it is evaluated whether the demand for oxidant increases and whether the second injector 120 shall be switched on. If this is the case, in step 503 the amount of oxidant fed to the first fluid injector 110 is increased until the oxidant pressure at the valve 150 exceeds the predetermined threshold value. The proportional pressure relief valve 150 starts to open delivering oxidant to the second fluid injector 120 maintaining sonic conditions in the first fluid injector 110.

In step 504, oxidant is therefore supplied via the first fluid 110 injector in the form of the sonic jets 113, 114 and also via the second fluid injector 120 in the form of the jets 123, 124. As the pressure increases upstream of the first fluid injector 110 the proportional pressure relief valve 150 continues to open and more oxidant flows to the second fluid injector 120.

In step 505 it is evaluated whether the demand for oxidant decreases and whether the second injector 120 shall be switched off. If this is the case, in step 506 the amount of oxidant fed to the first fluid injector 110 is decreased until the oxidant pressure at the valve 150 falls below the predetermined threshold value. The proportional pressure relief valve 150 closes and according to step 501 oxidant is provided only via the first fluid injector 110.

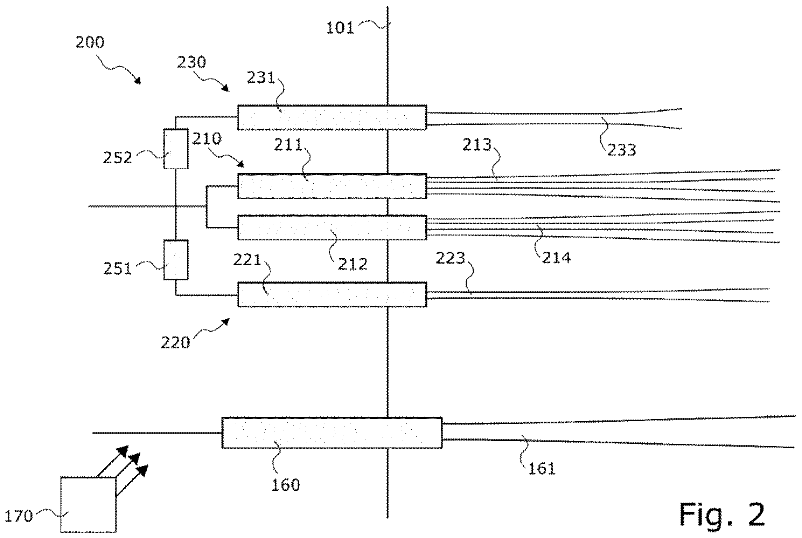

Fig. 2 shows schematically a burner with a fluid supply system 200 according to a further preferred embodiment of the present invention.

Analogously to the system 100 of Fig. 1, the fluid supply system 200 is also configured to provide oxygen as an oxidant and comprises a first fluid injector 210 with two first fluid injection elements in the form of two nozzles 211, 212.

A second fluid injector 220 of the system comprises one second fluid injection element in the form of a nozzle 221. A first proportional pressure relief valve 251 is provided as a first valve unit 251 between the first fluid injector 210 and the second fluid injector 220. This valve 251 is closed if a pressure of oxidant at this first valve 251 does not reach a first predetermined threshold value. If the oxidant pressure reaches the first predetermined threshold value, the valve 251 begins to open.

Further, a third fluid injector 230 comprises a third fluid injection element in the form of a nozzle 231. A second proportional pressure relief valve 252 is provided as a second valve unit 252 between the first fluid injector 110 and the third fluid injector 130. This second valve 252 is closed if the oxidant pressure at this second valve 252 does not reach a second predetermined threshold value. The second valve 252 begins to open if the oxidant pressure at the valve 252 reaches the second predetermined threshold value.

If the first valve unit 251 is opened, an oxidant jet 223 is produced by nozzle 221 and if the second valve unit 252 is opened, an oxidant jet 233 is produced by nozzle 231. The second predetermined threshold value can e.g. be larger than the first threshold value. For example, the second predetermined threshold value can be predetermined such that the second proportional pressure relief valve 252 begins to open when the first proportional pressure relief valve 251 is fully opened.

Further, the first and second predetermined threshold values are predetermined such that the nozzles 211, 212 always provide jets 213, 214 at least with a predetermined flowrate and sonic velocities, independently of whether the valves 251, 252 are opened or closed.

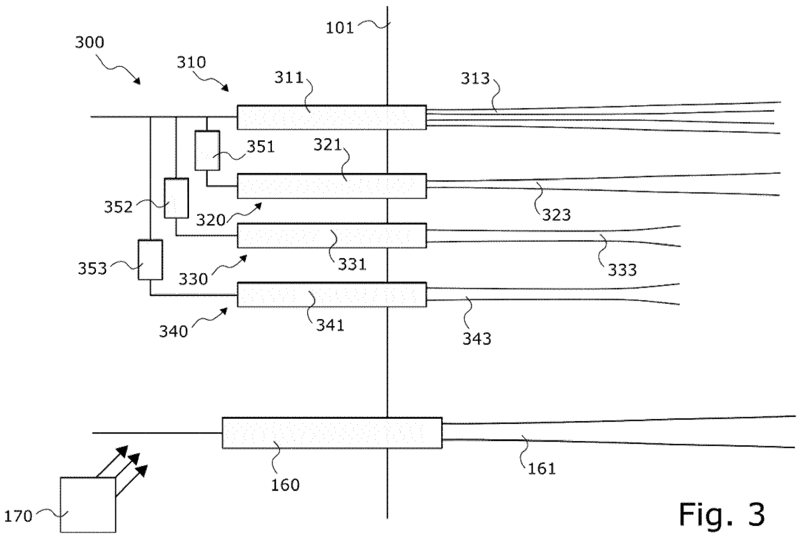

Fig. 3 schematically shows a burner with yet another preferred embodiment of a fluid supply system 300 according to the present invention for providing oxidant as fluid.

According to a preferred embodiment of the present invention there can also be several third fluid injectors, each connected to the first injector via a valve unit. In the following example of Fig. 3 a first one of these third fluid injectors is referred to as third fluid injector 330 and a second one of these third fluid injectors is referred to as fourth fluid injector 340.

In particular, a first fluid injector 310 comprises a nozzle 311 as one first fluid injection element. Further, a second fluid injector 320 comprises a nozzle 321 as one second fluid injection element. Analogously, the third fluid injector 330 is provided which comprises a third fluid injection element in the form of a nozzle 331 and the fourth fluid injector 340 is provided with a fourth fluid injection element also in the form of a nozzle 341.

A first proportional pressure relief valve 351 is provided as a first valve unit 351 between the first fluid injector 310 and the second fluid injector 320. A second proportional pressure relief valve 352 is provided as a second valve unit 352 between the first fluid injector 310 and the third fluid injector 330. Further, a third valve unit 353 in the form of a third proportional pressure relief valve 353 is provided between the first fluid injector 310 and the fourth fluid injector 340.

Analogously to the description above, the first valve 351 is closed if a pressure of oxidant does not reach a first predetermined threshold value and begins to open if the oxidant pressure reaches the first predetermined threshold value. The second valve 352 is closed if a pressure of oxidant does not reach a second predetermined threshold value and begins to open if the oxidant pressure reaches the second predetermined threshold value. Analogously, the third valve 352 is closed if a pressure of oxidant does not reach a third predetermined threshold value and begins to open if the oxidant pressure reaches the third predetermined threshold value.

These three predetermined threshold values can particularly be different from each other for example such that the second valve 352 begins to open when the first valve 351 is fully opened and such that the third valve 353 begins to open when the second valve 352 is fully opened.

Furthermore, the three predetermined threshold values are predetermined such that the first nozzle 311 always provides an oxidant jet 313 at least with a predetermined flowrate and thus at least with a sonic velocity, independently of whether the valves 351, 352, 353 are opened or closed.

With the oxidant supply system 300 three fluid injectors 320, 330, 340 can consecutively be switched on or off. Thus, if the oxidant demand increases, first of all the first valve 351 can be opened such that the nozzle 321 produces a jet 323. If the oxidant demand increases further, the second valve 352 can be opened and the third nozzle 331 produces an oxidant jet 333. If the oxidant demand still increases, also the third valve 353 can be opened and a fourth oxidant jet 343 can be created by the fourth nozzle 341 produces an oxidant jet 333.

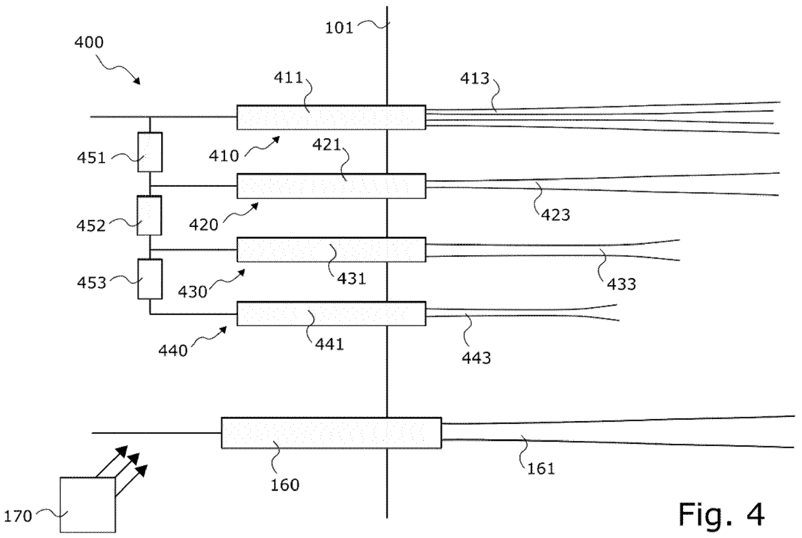

Fig. 4 schematically shows a burner with yet another preferred embodiment of a fluid supply system 400 according to the present invention for providing oxidant as fluid.

The fluid supply system 400 also comprises several third fluid injectors, each connected to the first injector via a valve unit like the system 300 of Fig. 3. However, these valve units of the system 400 are advantageously arranged in series not in parallel as in the system 300 in Fig. 3.

In particular, the fluid system 400 comprises a first fluid injector 410 with a nozzle 411 as one first fluid injection element and a second fluid injector 420 with a nozzle 421 as one second fluid injection element. Analogously to the example of Fig. 3, the systems 400 also comprises two third fluid injectors 430, 440, namely a third fluid injector 430 with a third fluid injection element in the form of a nozzle 431 and a fourth fluid injector 440 with a fourth fluid injection element also in the form of a nozzle 441.

A first proportional pressure relief valve 451 is provided as a first valve unit 451 between the first fluid injector 410 and the second fluid injector 420. A second proportional pressure relief valve 452 is provided as a second valve unit 452 between the first fluid injector 410 and the third fluid injector 430, particularly between the second fluid injector 420 and the third fluid injector 430. Further, a third valve unit 453 in the form of a third proportional pressure relief valve 453 is provided between the first fluid injector 410 and the fourth fluid injector 440, expediently between the third fluid injector 430 and the fourth fluid injector 440.

These valve units 451, 452, 453 are arranged in series, i.e. the second pressure relief valve 452 is behind or downstream of the first pressure relief valve 451, such that the first valve 451 needs to be open before the second valve 452 experiences any upstream pressure. Accordingly the third pressure relief valve 453 is behind or downstream the second pressure relief valve 452, i.e. the second valve 452 needs to be open before the third valve 453 experiences upstream pressure.

Particularly, the first valve 451 is closed if a pressure of the oxidant does not reach a first predetermined threshold value and begins to open if the oxidant pressure reaches the first predetermined threshold value. The second valve 452 is closed if a pressure of oxidant does not reach a second predetermined threshold value and begins to open if the oxidant pressure reaches the second predetermined threshold value. Accordingly, the third valve 452 is closed if a pressure of oxidant does not reach a third predetermined threshold value and begins to open if the oxidant pressure reaches the third predetermined threshold value.

These three predetermined threshold values are for example different from each other such that the second valve 452 begins to open when the first valve 451 is fully opened and such that the third valve 453 begins to open when the second valve 452 is fully opened. The three predetermined threshold values are predetermined such that the first nozzle 411 always provides an oxidant jet 413 at least with a predetermined flowrate and thus at least with a sonic velocity, independently of whether the valves 451, 452, 453 are opened or closed. It shall be noted that the system 400 can be extended or continued in a corresponding manner by an expedient number of second valve units and third injector elements.

It is to be noted that the embodiments of Figure 1, 2, 3 and 4 as described above can be combined in any manner without departing from the present invention, the scope of which being defended by the appended claims.

## Claims

1. A method of operating a burner,
wherein a fluid supply system (100) for the burner comprises
a first fluid injector (110) comprising at least one first fluid injection element (111, 112),
a second fluid injector (120) comprising at least one second fluid injection element (121, 122), and
a valve unit (150) between the first fluid injector (110) and the second fluid injector (120),
wherein a fluid is provided to the fluid supply system (100) such that the burner performs flameless combustion or at least semi flameless combustion (501),
wherein if a pressure of the fluid at the valve unit (150) does not reach a predetermined threshold value, the valve unit (150) is closed and the fluid is provided to the burner via the first fluid injector (110) at least with a predetermined flowrate (501),
wherein if the pressure of the fluid at the valve unit (150) reaches the predetermined threshold value, the valve unit (150) opens (503) and the fluid is provided to the burner via the first fluid injector (110) at least with the predetermined flowrate and also via the second fluid injector (120, 504).

2. The method according to claim 1, wherein if the pressure of the fluid at the valve unit (150) exceeds the predetermined threshold value, the valve unit (150) opens proportionally to the pressure of the fluid at the valve unit (150).

3. The method according to claim 1 or 2, wherein a proportional pressure relief valve (150) is provided as the valve unit.

4. The method according to any one of the preceding claims, wherein the predetermined flowrate corresponds to a sonic velocity of the fluid.

5. The method according to any one of the preceding claims, wherein the fluid is an oxidant, particularly oxygen or air or a mixture thereof.

6. The method according to any one of the preceding claims, wherein
the first fluid injector (110) comprises at least one nozzle (111, 112) as the at least one first fluid injection element and/or
the second fluid injector (120) comprises at least one nozzle (121, 122) as the at least one second fluid injection element.

7. The method according to any one of the preceding claims,
wherein the fluid supply system (200, 300, 400) for the burner further comprises
at least one third fluid injector (230; 330, 340; 430, 440) comprising at least one third fluid injection element (231; 331, 341; 431, 441),
at least one second valve unit (252; 352, 353; 452, 453) between the first fluid injector (210; 310; 410) and the at least one third fluid injector (230; 330, 340; 430, 440) or between the second fluid injector (220; 320; 420) and the at least one third fluid injector (230; 330, 340; 430, 440),
wherein if the pressure of the fluid at the at least one second valve unit (252; 352, 353; 452, 453) does not reach a second predetermined threshold value, the at least one second valve unit (252; 352, 353; 452, 453) is closed and the fluid is provided to the burner via the first fluid injector (210; 310; 410) at least with a predetermined flowrate or via the first fluid injector (210; 310; 410) at least with the predetermined flowrate and also via the second fluid injector (220; 320; 420),
wherein if the pressure of the fluid at the at least one second valve unit (252; 352, 353; 452, 453) reaches the second predetermined threshold value, the at least one second valve unit (252; 352, 353; 452, 453) opens and the fluid is provided to the burner via the first fluid injector (210; 310; 410) at least with the predetermined flowrate and also via the at least one third fluid injector (230; 330, 340; 430, 440) or via the first fluid injector (210; 310; 410) at least with the predetermined flowrate, and also via the second fluid injector (220; 320; 420) and also via the at least one third fluid injector (230; 330, 340; 430, 440).

8. A fluid supply system (100) for a burner, comprising
a first fluid injector (110) comprising at least one first fluid injection element (111 112),
a second fluid injector (120) comprising at least one second fluid injection element (121, 122),
a valve unit (150) between the first fluid injector (110) and the second fluid injector (120),
wherein the fluid supply system (100) is configured to provide a fluid to the burner such that the burner performs flameless combustion or at least semi flameless combustion,
wherein the valve unit (150) is configured to be closed if a pressure of the fluid at the valve unit (150) does not reach a predetermined threshold value such that the fluid is provided to the burner via the first fluid injector (110) at least with a predetermined flowrate,
wherein the valve unit (150) is configured to open if the pressure of the fluid at the valve unit (150) reaches the predetermined threshold value such that the fluid is provided to the burner via the first fluid injector (110) at least with the predetermined flowrate and also via the second fluid injector (120).

9. The fluid supply system according to claim 8, wherein the valve unit (150) is configured to open proportionally to the pressure to the pressure of the fluid at the valve unit (150), if the pressure of the fluid at the valve unit exceeds the predetermined threshold value.

10. The fluid supply system according to claim 8 or 9, wherein a proportional pressure relief valve (150) is provided as the valve unit.

11. The fluid supply system according to any one of the claims 8 to 10, wherein the predetermined flowrate corresponds to a sonic velocity of the fluid.

12. The fluid supply system according to any one of the claims 8 to 11, wherein an oxidant is provided as the fluid, particularly oxygen or air or a mixture thereof.

13. The fluid supply system according to any one of the claims 8 to 12, wherein
the first fluid injector (110) comprises at least one nozzle (111, 112) as the at least one first fluid injection element and/or
the second fluid injector (120) comprises at least one nozzle (121 ,122) as the at least one second fluid injection element.

14. The fluid supply system (200, 300) according to any one of the claims 8 to 12, further comprising
at least one third fluid injector (230; 330, 340; 430, 440) comprising at least one third fluid injection element (231; 331, 341; 431, 441),
at least one second valve unit (252; 352, 353; 452, 453) between the first fluid injector (210; 310; 410) and the at least one third fluid injector (230; 330, 340; 430, 440) or between the second fluid injector (220; 320; 420) and the at least one third fluid injector (230; 330, 340; 430, 440),
wherein the at least one second valve unit (252; 352, 353; 452, 453) is configured to be closed if the pressure of the fluid at the at least one second valve unit (252; 352, 353; 452, 453) does not reach a second predetermined threshold value such that the fluid is provided to the burner via the first fluid injector (210; 310; 410) at least with a predetermined flowrate or via the first fluid injector (210; 310; 410) at least with the predetermined flowrate and also via the second fluid injector (220; 320; 420),
wherein the at least one second valve unit (252; 352, 353; 452, 453) is configured to open if the pressure of the fluid at the at least one second valve unit (252; 352, 353; 452, 453) reaches the second predetermined threshold value, such that the fluid is provided to the burner via the first fluid injector (210; 310; 410) at least with the predetermined flowrate and also via the at least one third fluid injector (230; 330, 340; 430, 440) or via the first fluid injector (210; 310; 410) at least with the predetermined flowrate, and also via the second fluid injector (220; 320; 420) and also via the at least one third fluid injector (230; 330, 340; 430, 440).
